(19) Europäisches Patentamt
European Patent Office
Office européen des brevets

(11) **EP 4 668 365 A1**

(12) **EUROPEAN PATENT APPLICATION**
published in accordance with Art. 153(4) EPC

(43) Date of publication:
**24.12.2025 Bulletin 2025/52**

(21) Application number: 23927899.7

(22) Date of filing: **17.03.2023**

(51) International Patent Classification (IPC):
**H01M 4/62** (2006.01)

(52) Cooperative Patent Classification (CPC):
**H01M 4/62; H01M 4/131; H01M 10/0525;**
**H01M 10/0567;** H01M 2300/0042; Y02E 60/10

(86) International application number:
**PCT/CN2023/082279**

(87) International publication number:
**WO 2024/192580 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventors:
• **LV, Wanwan**
  **Ningde, Fujian 352100 (CN)**
• **SUN, Zhenhe**
  **Ningde, Fujian 352100 (CN)**

(74) Representative: **Icosa**
  **83 avenue Denfert-Rochereau**
  **75014 Paris (FR)**

(54) **SECONDARY BATTERY AND ELECTRONIC APPARATUS**

(57)     A secondary battery includes an electrode assembly, and the electrode assembly includes a positive electrode plate. The positive electrode plate includes a positive electrode active material layer. The positive electrode active material layer includes a positive electrode active material and a positive electrode additive. The positive electrode active material includes a transition metal element, the transition metal element including one or more selected from the group consisting of Co, Ni, Mn, Fe, and V. The positive electrode additive is a nitrile-containing organic compound, a carbon-to-nitrogen atom number ratio of the positive electrode additive is m, where $1 \leq m \leq 6$; a weight-average molecular weight of the positive electrode additive is $M_w$, where $300 \leq M_w \leq 800000$; and based on a mass of the positive electrode active material layer, a mass percentage of the positive electrode additive is x%, where $0.01 \leq x \leq 0.50$.

EP 4 668 365 A1

**Description**

**TECHNICAL FIELD**

This application relates to the field of electrochemical technologies, and in particular, to a secondary battery and an electronic apparatus.

**BACKGROUND**

With the advantages such as environmental friendliness, high energy storage density, high open-circuit voltage, low self-discharge rate, and long cycle life, secondary batteries, such as lithium-ion batteries have been widely used in various fields such as electric energy storage, mobile electronic devices, electric vehicles, and aerospace equipment. With the wide use of lithium-ion batteries, the market imposes increasingly high requirements for the performance of lithium-ion batteries. In current lithium-ion battery system, hot box performance has become a bottleneck issue for some projects, severely limiting the application of lithium-ion batteries.

**SUMMARY**

This application is intended to provide a secondary battery and an electronic apparatus to improve the hot box performance of the secondary battery.

It should be noted that in the content of this application, an example in which a lithium-ion battery is a secondary battery is used to illustrate this application. However, the secondary battery of this application is not limited to lithium-ion battery. The specific technical solutions are as follows.

A first aspect of this application provides a secondary battery, including an electrode assembly and an electrolyte. The electrode assembly includes a positive electrode plate, a negative electrode plate, and a separator. The separator is disposed between the positive electrode plate and the negative electrode plate. The positive electrode plate includes a positive electrode current collector and a positive electrode active material layer disposed on at least one surface of the positive electrode current collector. The positive electrode active material layer includes a positive electrode active material and a positive electrode additive. The positive electrode active material includes a transition metal element, the transition metal element including one or more selected from the group consisting of Co, Ni, Mn, Fe, and V. The positive electrode additive is a nitrile-containing organic compound, a carbon-to-nitrogen atom number ratio of the positive electrode additive is m, where $1 \leq m \leq 6$; a weight-average molecular weight of the positive electrode additive is $M_w$, where $300 \leq M_w \leq 800000$; and based on a mass of the positive electrode active material layer, a mass percentage of the positive electrode additive is x%, where $0.01 \leq x \leq 0.50$. With the carbon-to-nitrogen atom number ratio m of the positive electrode additive, the weight-average molecular weight $M_w$ of the positive electrode additive, and the mass percentage x% of the positive electrode additive all being regulated within the ranges of this application, the positive electrode additive imparts good stability to the positive electrode plate and exhibits lower oxidative capability toward the electrolyte. The content of gas generated due to oxidation of the electrolyte is reduced, and the pass rate of the hot box test of the secondary battery is improved, thereby improving the hot box performance of the secondary battery.

In some embodiments of this application, the secondary battery satisfies at least one of the following conditions: (1) $3 \leq m \leq 4$; (2) $300000 \leq M_w \leq 500000$; or (3) $0.30 \leq x \leq 0.50$. When the secondary battery satisfies at least one of the above conditions (1) to (3), it is conducive to further improving the hot box performance of the secondary battery.

In some embodiments of this application, the positive electrode additive includes one or more selected from the group consisting of polyacrylonitrile, polybutenenitrile, poly(5-hexenenitrile), and polyisobutylonitrile. Use of the above types of positive electrode additives is conducive to improving the hot box performance of the secondary battery.

In some embodiments of this application, $0.1 \leq xM_w/1000 \leq 300$, preferably $90 \leq xM_w/1000 \leq 175$. Regulation of the value of $xM_w/1000$ within the above range is conducive to improving the hot box performance of the secondary battery.

In some embodiments of this application, the secondary battery further includes an electrolyte, where the electrolyte includes a nitrile additive, and the nitrile additive includes one or more selected from the group consisting of succinonitrile, adiponitrile, ethylene glycol bis(2-cyanoethyl) ether, and 1,2,3-tris(2-cyanoethoxy)propane. Based on a mass of the electrolyte, a mass percentage of the nitrile additive is z%, where $0.1 \leq z < 4.2$. Use of the above types of nitrile additives and regulating the mass percentage z% of the nitrile additive in the electrolyte within the above range is conducive to improving the hot box performance and room-temperature storage performance of the secondary battery.

In some embodiments of this application, $2.0 \leq z+x \leq 4.5$, preferably $3.0 \leq z+x \leq 4.0$. With a sum of the mass percentage x% of the positive electrode additive in the positive electrode active material layer and the mass percentage z% of the nitrile additive in the electrolyte, denoted as z+x, being regulated within the above range, a synergistic effect between the positive electrode additive and the nitrile additive is achieved, which is conducive to improving the hot box performance and room-temperature storage performance of the secondary battery.

In some embodiments of this application, an upper limit voltage of the secondary battery is U V, where $3.0 \leq U \leq 5.0$, and $8.0 \leq U/x \leq 440.0$, preferably $10.0 \leq U/x \leq 100.0$; more preferably $20.0 \leq U/x \leq 80.0$. Regulation of a ratio U/x of the upper limit voltage of the secondary battery to the mass percentage of the positive electrode additive in the positive electrode active material layer within the above range is conducive to improving the hot box performance of the secondary battery.

In some embodiments of this application, an operating capacity of the secondary battery is C Ah, where $1 \leq C \leq 20$, and $2.2 \leq C/x \leq 200.0$, preferably $5.0 \leq C/x \leq 50.0$. Regulation of a ratio C/x of the operating capacity of the secondary battery to the mass percentage of the positive electrode additive in the positive electrode active material layer within the above range is conducive to improving the hot box performance of the secondary battery.

In some embodiments of this application, the transition metal element includes Ni, and based on a total mass of the transition metal element, a mass percentage of Ni is n%, where $18 \leq n \leq 64$, and $0.4 \leq n/(100x) \leq 33.0$, preferably $2.0 \leq n/(100x) \leq 20.0$. Regulation of the mass percentage n% of Ni in the transition metal element and a value of n/(100x) within the above ranges is conducive to improving the hot box performance of the secondary battery.

A second aspect of this application provides an electronic apparatus, including the secondary battery described in any of the above embodiments. Therefore, it exhibits good safety performance and a long service life.

The technical effects of this application are as follows:

This application provides a secondary battery and an electronic apparatus, where the secondary battery includes an electrode assembly and an electrolyte, and the electrode assembly includes a positive electrode plate, a negative electrode plate, and a separator. The separator is disposed between the positive electrode plate and the negative electrode plate. The positive electrode plate includes a positive electrode current collector and a positive electrode active material layer disposed on at least one surface of the positive electrode current collector. The positive electrode active material layer includes a positive electrode active material and a positive electrode additive. The positive electrode active material includes a transition metal element, where the transition metal element includes one or more selected from the group consisting of Co, Ni, Mn, Fe, and V. The positive electrode additive is a nitrile-containing organic compound, a carbon-to-nitrogen atom number ratio of the positive electrode additive is m, where $1 \leq m \leq 6$; a weight-average molecular weight of the positive electrode additive is $M_w$, where $300 \leq M_w \leq 800000$; and based on a mass of the positive electrode active material layer, a mass percentage of the positive electrode additive is x%, where $0.01 \leq x \leq 0.50$. With the carbon-to-nitrogen atom number ratio m of the positive electrode additive, the weight-average molecular weight $M_w$ of the positive electrode additive, and the mass percentage x% of the positive electrode additive all being regulated within the ranges of this application, the positive electrode additive imparts good stability to the positive electrode plate and exhibits lower oxidative capability toward the electrolyte. The content of gas generated due to oxidation of the electrolyte is reduced, and the pass rate of the hot box test of the secondary battery is improved, thereby improving the hot box performance of the secondary battery. Additionally, the secondary battery exhibits good room-temperature cycle performance, high production efficiency, and low production costs.

**DETAILED DESCRIPTION**

To make the objectives, technical solutions, and advantages of this application clearer, the following further describes this application in detail with reference to some embodiments. Apparently, the described embodiments are only some rather than all of these embodiments of this application. All other embodiments obtained by persons of ordinary skill in the art based on some embodiments of this application shall fall within the protection scope of this application.

It should be noted that in specific embodiments of this application, an example in which a lithium-ion battery is used as a secondary battery is used to illustrate this application. However, the secondary battery of this application is not limited to the lithium-ion battery.

In current lithium-ion battery system, hot box performance has become a bottleneck issue for some projects, severely limiting the development of lithium-ion batteries. The failure mode of the hot box test mainly includes: severe gas generation at high temperatures, leading to damage to the lithium-ion battery, followed by combustion of the negative electrode and electrolyte in a further high-temperature environment, resulting in hot box test failure. The amount of gas generated is mainly related to the redox reactions between the positive electrode and the electrolyte. In existing lithium-ion batteries at high temperatures, the positive electrode exhibits strong oxidative capability toward the electrolyte, causing the electrolyte to generate a large amount of gas, which reduces the hot box performance of lithium-ion battery.

An additive can be added to the electrolyte to reduce the oxidative capability of the positive electrode. However, the additive in the electrolyte is typically composed of functional groups (such as nitrile groups) with strong electronegativity. The electronegativity of polar functional groups complexes with high-valence transition metal ions $TM^+$ in the fully charged positive electrode, reducing the oxidative capability of $TM^+$ and improving the high-temperature performance of the secondary battery. However, the addition of polar functional groups often introduces reactive $\alpha$-H, which is easily reduced at a negative electrode plate side, accelerating the consumption of a negative electrode additive and causing the deterioration of room-temperature cycle performance. Balancing the high-temperature performance and room-temperature cycle performance of the secondary battery has become the key to improving hot box performance. Based on this, this application provides a secondary battery and an electronic apparatus.

A first aspect of this application provides a secondary battery, including an electrode assembly and an electrolyte, where the electrode assembly includes a positive electrode plate, a negative electrode plate, and a separator, and the separator is disposed between the positive electrode plate and the negative electrode plate. The positive electrode plate includes a positive electrode current collector and a positive electrode active material layer disposed on at least one surface of the positive electrode current collector, and the positive electrode active material layer includes a positive electrode active material and a positive electrode additive. The positive electrode active material includes a transition metal element, the transition metal element including one or more selected from the group consisting of Co, Ni, Mn, Fe, and V. The positive electrode additive is a nitrile-containing (-CN) organic compound, a carbon-to-nitrogen atom number ratio of the positive electrode additive is m, where $1 \leq m \leq 6$; preferably $3 \leq m \leq 4$. A weight-average molecular weight of the positive electrode additive is $M_w$, where $300 \leq M_w \leq 800000$; preferably $300000 \leq M_w \leq 500000$. Based on a mass of the positive electrode active material layer, a mass percentage of the positive electrode additive is x%, where $0.01 \leq x \leq 0.50$; preferably $0.30 \leq x \leq 0.50$. For example, the carbon-to-nitrogen atom number ratio m of the positive electrode additive is 1, 2, 3, 4, 5, 6, or any one in a range defined by any two of these values. For example, the weight-average molecular weight $M_w$ of the positive electrode additive is 300, 1000, 10000, 100000, 200000, 300000, 400000, 500000, 600000, 700000, 800000, or any one in a range defined by any two of these values. For example, based on the mass of the positive electrode active material layer, the mass percentage x% of the positive electrode additive is 0.01%, 0.05%, 0.10%, 0.15%, 0.20%, 0.25%, 0.30%, 0.35%, 0.40%, 0.45%, 0.50%, or any one in a range defined by any two of these values. It should be understood that, for ease of reference, the positive electrode additive is defined in this application as a nitrile-containing organic compound. However, the positive electrode active material layer may also include other additives, such as a first positive electrode additive.

When the carbon-to-nitrogen atom number ratio m of the positive electrode additive is less than 1, the content of polar functional groups (such as -CN) in the positive electrode additive is too low to be insufficient to complex with the transition metal element in the positive electrode active material. The transition metal that does not undergo a complexation reaction exhibits strong oxidative capability toward the electrolyte, causing the electrolyte to generate a large amount of gas, thereby affecting the high-temperature performance of the secondary battery and reducing the hot box pass rate of the secondary battery. When the carbon-to-nitrogen atom number ratio m of the positive electrode additive is greater than 6, the content of polar functional groups in the positive electrode additive is too high, a large amount of reactive $\alpha$-H is introduced, and $\alpha$-H is easily reduced at the negative electrode plate side, accelerating the consumption of the negative electrode additive and causing the deterioration of room-temperature cycle performance.

When the weight-average molecular weight $M_w$ of the positive electrode additive is less than 300, the positive electrode additive is easily dissolved in the electrolyte. When the weight-average molecular weight $M_w$ of the positive electrode additive is greater than 800000, during the preparation of a positive electrode slurry with the addition of the positive electrode additive, the positive electrode additive and the positive electrode active material are not easily mixed uniformly, which affects the respective functions of the positive electrode active material and the positive electrode additive during the cycling process of the secondary battery, thereby affecting the performance of the secondary battery, such as room-temperature cycle performance, hot box performance, and energy density.

When the mass percentage x% of the positive electrode additive, based on the mass of the positive electrode active material layer, is less than 0.01%, the content of the positive electrode additive is too low, reducing the possibility of inhibiting the oxidative capability of the transition metal element in the positive electrode active material toward the electrolyte, and the improvement in the hot box performance of the secondary battery is not significant. When the mass percentage x% of the positive electrode additive is greater than 0.50%, the brittleness of the positive electrode plate increases, leading to abnormalities during the manufacturing process, such as strip breakage in cold pressing or strip breakage in winding, which increases the production cost of the secondary battery and reduces production efficiency thereof.

Overall, with the carbon-to-nitrogen atom number ratio m of the positive electrode additive, the weight-average molecular weight $M_w$ of the positive electrode additive, and the mass percentage x% of the positive electrode additive all being regulated within the ranges of this application, the positive electrode additive imparts good stability to the positive electrode plate and exhibits lower oxidative capability toward the electrolyte. The content of gas generated due to oxidation of the electrolyte is reduced, and the pass rate of the hot box test of the secondary battery is improved, thereby improving the hot box performance of the secondary battery. Additionally, the secondary battery exhibits good room-temperature cycle performance, high production efficiency, and low production costs. Regulation of at least one of the carbon-to-nitrogen atom number ratio m of the positive electrode additive, the weight-average molecular weight $M_w$ of the positive electrode additive, or the mass percentage x% of the positive electrode additive within the preferred ranges of this application results in superior hot box performance of the secondary battery.

The phrase "positive electrode active material layer disposed on at least one surface of the positive electrode current collector" refers to a positive electrode active material layer disposed on one surface of the positive electrode current collector or positive electrode active material layers disposed on two surfaces of the positive electrode current collector. The term "surface" may refer to a partial surface or the entire surface of the positive electrode current collector. In some embodiments of this application, other material layers, such as an adhesive layer, a safety layer, or other active material layers, may also be disposed between the positive electrode active material layer and the positive electrode current collector.

The method of regulating the weight-average molecular weight $M_w$ of the positive electrode additive is not particularly limited in this application, provided that the objectives of this application can be achieved. For example, the weight-average molecular weight $M_w$ of the positive electrode additive is varied by regulating the reaction temperature or the amount of monomer added.

In some embodiments of this application, the positive electrode additive includes at least one of polyacrylonitrile (molecular formula: $(C_3H_3N)_n$), polybutenenitrile (molecular formula: $(C_4H_5N)_n$), poly(5-hexenenitrile) (molecular formula: $(C_6H_9N)_n$), or polyisobutylonitrile (molecular formula: $(C_4H_5N)_n$). Use of the above types of positive electrode additives enables sufficient complexation reactions between the polar functional groups in the positive electrode active additive and the transition metal element in the positive electrode active material, so that the positive electrode plate exhibits good stability and exhibits lower oxidative capability toward the electrolyte. The content of gas generated due to oxidation of the electrolyte is reduced, and the pass rate of the hot box test of the secondary battery is improved, thereby improving the hot box performance of the secondary battery.

In some embodiments of this application, $0.1 \leq xM_w/1000 \leq 300$; preferably $90 \leq xM_w/1000 \leq 175$. For example, $xM_w/1000$ is 0.1, 5, 30, 60, 90, 150, 200, 300, or any one in a range defined by any two of these values. Regulation of the value of $xM_w/1000$ within the above range ensures that the positive electrode plate exhibits manufacturing yield while exhibiting good stability and exhibits lower oxidative capability toward the electrolyte. The content of gas generated due to oxidation of the electrolyte is reduced, and the pass rate of the hot box test of the secondary battery is improved, thereby improving the hot box performance of the secondary battery. Additionally, the secondary battery exhibits good room-temperature cycle performance, high production efficiency, and low production costs.

In some embodiments of this application, the electrolyte includes a nitrile additive, and the nitrile additive includes one or more selected from the group consisting of succinonitrile, adiponitrile, ethylene glycol bis(2-cyanoethyl) ether, and 1,2,3-tris(2-cyanoethoxy)propane. Based on a mass of the electrolyte, a mass percentage of the nitrile additive is z%, where $0.1 \leq z < 4.2$. For example, the mass percentage z% of the nitrile additive is 0.1%, 0.5%, 1.0%, 1.5%, 2.0%, 2.5%, 3.0%, 3.5%, 4.0%, 4.15%, or any one in a range defined by any two of these values. By selecting the above types of nitrile additives and regulating the mass percentage z% of the nitrile additive in the electrolyte within the above range, the corrosion rate of the negative electrode current collector (such as copper foil) can be reduced on the basis that the secondary battery exhibits good hot box performance, slowing down self-discharge of the secondary battery, and reducing the risk of failure during room-temperature storage, thereby allowing the secondary battery to exhibit good room-temperature storage performance.

In some embodiments of this application, $2.0 \leq z+x \leq 4.5$; preferably $3.0 \leq z+x \leq 4.0$. For example, the value of z+x is 2.0, 2.5, 3.0, 3.5, 4.0, 4.5, or any one in a range defined by any two of these values. Regulation of the sum of the mass percentage x% of the positive electrode additive in the positive electrode active material layer and the mass percentage z% of the nitrile additive in the electrolyte, denoted as z+x, within the above range, a synergistic effect between the positive electrode additive and the nitrile additive is achieved, allowing the positive electrode plate to exhibit an appropriate loading amount of the positive electrode active material and the electrolyte to exhibit good lithium-ion transport capability. The positive electrode additive imparts good stability to the positive electrode plate and exhibits lower oxidative capability toward the electrolyte. The content of gas generated due to oxidation of the electrolyte is reduced, the corrosion rate of the negative electrode current collector (such as copper foil) is reduced, slowing down self-discharge of the secondary battery, and reducing the risk of failure during room-temperature storage. Consequently, the secondary battery exhibits high hot box performance and room-temperature storage performance. Regulation of the value of z+x within the above preferred range results in superior hot box performance and room-temperature storage performance of the secondary battery.

In some embodiments of this application, an upper limit voltage of the secondary battery is U V, where $3.0 \leq U \leq 5.0$, and $8.0 \leq U/x \leq 440.0$; preferably $10.0 \leq U/x \leq 100.0$, more preferably $20.0 \leq U/x \leq 80.0$. For example, the value of U is 3.0, 3.5, 4.0, 4.5, 5.0, or any one in a range defined by any two of these values. The value of U/x is 8.0, 9.0, 10.0, 15.0, 20.0, 40.0, 60.0, 80.0, 100.0, 150.0, 200.0, 250.0, 300.0, 350.0, 400.0, 440.0, or any one in a range defined by any two of these values. When the upper limit voltage of the secondary battery increases, the oxidative capability of the positive electrode plate toward the electrolyte is improved, thereby affecting the hot box performance of the secondary battery. Regulation of the ratio U/x of the upper limit voltage of the secondary battery to the mass percentage of the positive electrode additive in the positive electrode active material layer within the above range ensures that, as the upper limit voltage of the secondary battery increases, the mass percentage x% of the positive electrode additive in the positive electrode active material layer increases accordingly. This allows for complexation between the positive electrode additive and the transition metal elements in the positive electrode active material, so that the positive electrode plate exhibits good stability and exhibits lower oxidative capability toward the electrolyte. The content of gas generated due to oxidation of the electrolyte is reduced, and the pass rate of the hot box test of the secondary battery is improved, thereby improving the hot box performance and ensuring good safety performance of the secondary battery. Additionally, regulating the content of the positive electrode additive and the loading amount of the positive electrode active material on the positive electrode plate within appropriate ranges minimizes the effect on the energy density of the secondary battery.

The method of regulating the upper limit voltage of the secondary battery is not particularly limited in this application, provided that the objectives of this application can be achieved. For example, the upper limit voltage of the secondary battery is regulated by adjusting a ratio of the coating amounts (coating weight of an active material layer) of the positive and negative electrodes.

In some embodiments of this application, an operating capacity of the secondary battery is C Ah, where $1 \leq C \leq 20$, and $2.2 \leq C/x \leq 200.0$, preferably $5.0 \leq C/x \leq 50.0$. For example, the value of C is 1, 2, 4, 6, 8, 10, 12, 14, 16, 18, 20, or any one in a range defined by any two of these values. The value of C/x is 2.2, 3.0, 5.0, 20.0, 40.0, 50.0, 80.0, 100.0, 150.0, 200.0, or any one in a range defined by any two of these values. When the operating capacity of the secondary battery increases, the reaction sites between the positive electrode plate and the electrolyte increase, increasing the risk of side reactions in the electrolyte. The heat generated by the reactions leads to thermal accumulation, which affects the hot box performance of the secondary battery. Regulation of the ratio C/x of the operating capacity of the secondary battery to the mass percentage of the positive electrode additive in the positive electrode active material layer within the above range ensures that, as the operating capacity of the secondary battery increases, the mass percentage x% of the positive electrode additive in the positive electrode active material layer increases accordingly, reducing the extent of side reactions in the electrolyte and mitigating thermal accumulation due to the heat generated from the reactions, thereby lowering the risk of hot box test failure and improving the hot box performance of the secondary battery. This allows the secondary battery to exhibit good safety performance. Additionally, regulating the content of the positive electrode additive and the loading amount of the positive electrode active material on the positive electrode plate within appropriate ranges minimizes the effect on the energy density of the secondary battery.

The method of regulating the operating capacity of the secondary battery is not particularly limited in this application, provided that the objectives of this application can be achieved. For example, the operating capacity of the secondary battery is regulated by adjusting the coating amounts (coating weight of the active material layer) of the positive and negative electrodes.

In some embodiments of this application, the transition metal element includes Ni, and based on a total mass of the transition metal element, a mass percentage of Ni is n%, where $18 \leq n \leq 64$, and $0.4 \leq n/(100x) \leq 33.0$; preferably $2.0 \leq n/(100x) \leq 20.0$. For example, the value of n is 18, 24, 30, 36, 42, 48, 54, 60, 64, or any one in a range defined by any two of these values. The value of n/(100x) is 0.4, 1.0, 2.0, 11.0, 20.0, 24.0, 28.0, 32.0, 33.0, or any one in a range defined by any two of these values. The oxidative capability of $Ni^{4+}$ is greater than that of $Co^{4+}$ and $Mn^{4+}$, so an increase in Ni content leads to more side reactions between the positive electrode and the electrolyte in the entire secondary battery system, further affecting the hot box performance of the secondary battery. By regulating the mass percentage n% of Ni in the transition metal element and the value of n/(100x) within the above ranges, without affecting the energy density of the secondary battery, the content of the positive electrode additive increases with the increase in Ni content, allowing for timely complexation with Ni, so that the positive electrode plate exhibits good stability and exhibits lower oxidative capability toward the electrolyte. The content of gas generated due to oxidation of the electrolyte is reduced, and the pass rate of the hot box test of the secondary battery is improved, thereby improving the hot box performance of the secondary. This allows the secondary battery to exhibit good safety performance. Additionally, regulating the content of the positive electrode additive and the loading amount of the positive electrode active material on the positive electrode plate within appropriate ranges minimizes the effect on the energy density of the secondary battery.

The method of regulating the mass percentage n% of Ni in the transition metal element is not particularly limited in this application, provided that the objectives of this application can be achieved. For example, the mass percentage n% of Ni in the transition metal element is regulated by adjusting the type of positive electrode active material and the proportion of different positive electrode active materials (such as a ratio of LCO to NCM).

The type of positive electrode current collector is not particularly limited in this application, provided that the objectives of this application can be achieved. For example, the positive electrode current collector may include aluminum foil, aluminum alloy foil, or the like. The type of positive electrode active material in this application only includes the transition metal element of this application to achieve the objectives of this application. For example, the positive electrode active material may include at least one of nickel cobalt lithium manganate (811, 622, 523, 111), lithium nickel cobalt aluminate, lithium iron phosphate, a lithium-rich manganese-based material, lithium cobalt oxide ($LiCoO_2$), lithium manganate, lithium iron manganese phosphate, or lithium titanate. In this application, the positive electrode active material may further include a non-metal element, for example, the non-metal element includes at least one of fluorine, phosphorus, boron, chlorine, silicon, or sulfur. These elements can further improve the stability of the positive electrode active material. Thicknesses of the positive electrode current collector and the positive electrode active material layer are not particularly limited in this application, provided that the objectives of this application can be achieved. For example, the thickness of the positive electrode current collector is 5 $\mu$m to 20 $\mu$m, preferably 6 $\mu$m to 18 $\mu$m. The thickness of the positive electrode active material layer is 30 $\mu$m to 120 $\mu$m.

Optionally, the positive electrode active material layer may further include a conductive agent and a binder. Types of the conductive agent and the binder in the positive electrode active material layer are not particularly limited in this application, provided that the objectives of this application can be achieved. A mass ratio of the positive electrode active material, the conductive agent, and the binder in the positive electrode active material layer is not particularly limited in this application, and persons skilled in the art can make selection according to actual needs, provided that the objectives of this application can be achieved. For example, the mass ratio of the positive electrode active material, the positive electrode additive, the conductive agent, and the binder in the positive electrode active material layer is (90.00 to 99.00):(0.01 to 0.50):(0.495 to 4.75):(0.495 to 4.75).

A negative electrode plate is not particularly limited in this application, provided that the objectives of this application can be achieved. For example, the negative electrode plate includes a negative electrode current collector and a negative electrode active material layer. The negative electrode current collector is not particularly limited in this application, provided that the objectives of this application can be achieved. For example, the negative electrode current collector may include copper foil, copper alloy foil, nickel foil, stainless steel foil, titanium foil, nickel foam, copper foam, or the like. The negative electrode active material layer of this application includes a negative electrode active material. The type of negative electrode active material is not particularly limited in this application, provided that the objectives of this application can be achieved. For example, the negative electrode active material may include at least one of natural graphite, artificial graphite, a mesocarbon microbead (MCMB), hard carbon, soft carbon, silicon, a silicon-carbon composite, $SiO_x$ (0<x<2), a Li-Sn alloy, a Li-Sn-O alloy, Sn, SnO, $SnO_2$, spinel-structure lithium titanate $Li_4Ti_5O_{12}$, a Li-Al alloy, or lithium metal. Thicknesses of the negative electrode current collector and the negative electrode active material layer are not particularly limited in this application, provided that the objectives of this application can be achieved. For example, the thickness of the negative electrode current collector is 6 $\mu$m to 10 $\mu$m, and the thickness of the negative electrode active material layer is 30 $\mu$m to 130 $\mu$m. Optionally, the negative electrode active material layer may further include at least one of a conductive agent, a stabilizer, and a binder. The types of the conductive agent, the stabilizer, and the binder in the negative electrode active material layer are not particularly limited in this application, provided that the objectives of this application can be achieved. A mass ratio of the negative electrode active material, the conductive agent, the stabilizer, and the binder in the negative electrode active material layer is not particularly limited in this application, provided that the objectives of this application can be achieved. For example, the mass ratio of the negative electrode active material, the conductive agent, the stabilizer, and the binder in the negative electrode active material layer is (97 to 98):(0.5 to 1.5):(0.5 to 1.5):(1.0 to 1.9).

The separator is not particularly limited in this application, provided that the objectives of this application can be achieved. For example, the material of the separator may include, but is not limited to, at least one of polyethylene (PE), polypropylene (PP)-based polyolefin (PO), polyester (for example, polyethylene terephthalate (PET) film), cellulose, polyimide (PI), polyamide (PA), spandex, or aramid. The type of separator may include at least one of a woven film, a non-woven film, a microporous film, a composite film, a laminated film, or a spinning film.

For example, the separator may include a separator substrate layer and a surface treatment layer. The separator substrate layer may be a non-woven fabric, film, or composite film having a porous structure, and the material of the separator substrate layer may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is disposed on at least one surface of the separator substrate layer, and the surface treatment layer may be a polymer layer or an inorganic substance layer, or a layer formed by mixing a polymer and an inorganic substance. For example, the inorganic substance layer includes inorganic particles and a binder. The inorganic particles are not particularly limited, and for example, may include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, provided that the objectives of this application can be achieved. The polymer layer includes a polymer, and the material of the polymer includes one or more selected from the group consisting of polyamide, polyacrylonitrile, acrylate polymer, polyacrylic acid, polyacrylate salt, polyvinylpyrrolidone, polyvinyl ether, polyvinylidene fluoride, and poly(vinylidene fluoride-hexafluoropropylene).

The electrolyte of this application further includes a lithium salt and a non-aqueous solvent. The lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalato)borate (LiBOB), or lithium difluoroborate. The non-aqueous solvent is not particularly limited in this application, provided that the objectives of this application can be achieved. For example, the non-aqueous solvent may include, but is not limited to, at least of a carbonate compound, a carboxylate compound, an ether compound, or another organic solvent. The carbonate compound may include, but is not limited to, at least one of a linear carbonate compound, a cyclic carbonate compound, or a fluorocarbonate compound. The linear carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolide, valerolactone, or caprolactone. The ether compound may include, but is not limited to, at least one of dibutyl ether, tetraethylene glycol dimethyl ether, diglyme, 1,2-dimethoxyethane, 1,2-diethoxyethane, 1-ethoxy-1-methoxyethane, 2-methyltetrahydrofuran, or tetrahydrofuran. The another organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The content of the lithium salt and the non-aqueous solvent in the electrolyte is not particularly limited in this application, provided that the objectives of this application can be achieved. For example, based on a mass of the electrolyte, the mass percentage of the lithium salt may be 2% to 20%. For example, the value may be 2%, 5%, 10%, 15%, 20%, or any one in a range defined by any two of these values. The mass percentage of the non-aqueous solvent may be 15% to 80%. For example, the value may be 15%, 20%, 30%, 40%, 50%, 60%, 70%, 80%, or any one in a range defined by any two of these values.

The secondary battery of this application further includes a packaging bag, and the electrolyte and the electrode assembly are accommodated in the packaging bag. The packaging bag is not particularly limited in this application and may be any well-known packaging bag in the art, provided that the objectives of this application can be achieved.

The secondary battery in this application is not particularly limited, and may include any apparatus in which electrochemical reactions take place. For example, the secondary battery may include, but is not limited to, a lithium metal secondary battery, a lithium-ion secondary battery (a lithium-ion battery), a sodium-ion secondary battery (a sodium-ion battery), a lithium polymer secondary battery, or a lithium-ion polymer secondary battery.

A second aspect of this application provides an electronic apparatus, including the secondary battery described in any of the above embodiments. Therefore, it exhibits good safety performance and a long service life.

The electronic apparatus in this application is not particularly limited, and may be any electronic apparatus known in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

## Examples

The following describes some embodiments of this application more specifically by using examples and comparative examples. Various tests and evaluations are performed according to the following methods.

### Test methods and device:

### Carbon-to-nitrogen atom number ratio detection method:

Lithium-ion batteries of each example and comparative example were disassembled to obtain the positive electrode plate portion, which was washed three times with dimethyl carbonate (DMC) to remove free lithium salts on a surface and soluble components in a solid electrolyte interface (SEI) film. The positive electrode plate was placed in an appropriate amount of N-methylpyrrolidone sufficient to immerse the positive electrode plate and stirred for 5 h. The mixture was filtered to obtain the supernatant. The supernatant was separated by chromatography to obtain a pure-phase N-methylpyrrolidone solution of the positive electrode additive.

The obtained N-methylpyrrolidone solution of the positive electrode additive was dried to obtain a pure-phase positive electrode additive. The carbon-to-nitrogen atom number ratio of the positive electrode additive was then obtained using an organic element analyzer through organic element analysis.

### Weight-average molecular weight $M_w$ detection method:

The weight-average molecular weight $M_w$ was detected using a laser light scattering instrument.

**Transition metal element content test method:**

Lithium-ion batteries of each example and comparative example were disassembled to obtain the positive electrode plate portion, which was calcined at 600°C for 2 h in an air atmosphere. A positive electrode active material layer was scraped off from a positive electrode current collector, digested with hydrochloric acid, and filtered to obtain the supernatant. After sufficient dilution with ultrapure water, the content of each transition metal element was obtained using inductively coupled plasma mass spectrometry (ICP-MS).

**Negative electrode gram capacity test method:**

A fully discharged lithium-ion battery was disassembled to obtain a negative electrode plate, which was washed and dried. A lithium metal plate was used as the positive electrode. A button battery was assembled for testing. The button battery was discharged to 5.0 mV at 0.05C, discharged to 5.0 mV at 50 μA, discharged to 5.0 mV at 10 μA, and charged to 2.0 V at 0.1C; the capacity of the button battery at this point was recorded as the gram capacity. Here, 0.05C is a current value at 0.05 times the designed gram capacity, and 0.1C is a current value at 0.1 times the designed gram capacity.

**CB test method:**

A fully discharged lithium-ion battery was disassembled to obtain the positive and negative electrodes, which were washed and dried. Five complete electrode plates were punched from the flat single-sided areas of the positive and negative electrodes using a die head having a diameter of 14 mm. A lithium place was used as the counter electrode. A button battery was assembled for testing. The capacity of the positive electrode was tested according to the gram capacity test method and recorded as $C_1$, $C_2$, $C_3$, $C_4$, and $C_5$, and an average capacity of the punched positive electrode plates was calculated as $C_{positive}$. Similarly, the capacity of the negative electrode was tested and recorded as $A_1$, $A_2$, $A_3$, $A_4$, and $A_5$, and an average capacity of the punched negative electrode plates was calculated as $A_{negative}$. CB = $A_{negative}$/$C_{positive}$.
In this application, the term "CB" referred to cell balance, which indicated the capacity ratio of the negative electrode to the positive electrode in the battery.

**Operating capacity C test method:**

(1) Lithium-ion batteries of each example and comparative example were discharged to 3.0 V at a current density of 0.2C.
(2) The lithium-ion battery was disassembled to obtain the negative electrode plate, and a length of a coating area lengths of front and back sides, $L_1+L_2$, in cm) and width ($W_d$, in cm) were recorded. The negative electrode plate (double-sided area, 2 cm × 2 cm) was taken, washed twice with DMC, and air-dried.
(3) The weight was measured and recorded as $W_1$.
(4) The negative electrode plate was washed with distilled water to remove a coating layer on a current collector, air-dried, and weighed, with the weight recorded as $W_2$.
(5) An operating capacity C = 1/4($W_1$-$W_2$) × Wa($L_1+L_2$) × $A_{negative}$/CB.

**Upper limit voltage U test method:**

(1) Lithium-ion batteries of each example and comparative example were fully discharged, with the discharge process as follows: discharged to 3.0 V at a constant current of 0.2C, left standing for 30 min; and discharged to 3.0 V at a constant current of 0.2C (where C is the operating capacity of the lithium-ion battery).
(2) The battery was charged at a current of 0.05C for 20 h, the voltage V at this point was recorded, and the voltage V was the upper limit voltage.

**Hot box performance test:**

Five lithium-ion batteries from each example and comparative example were taken and charged to the upper limit voltage at 0.2C (where C is the operating capacity of the lithium-ion battery), then maintained at the upper limit voltage (constant voltage charging) until the current was less than or equal to 0.02C, and charging was stopped. After full charge, the lithium-ion batteries were placed in a test environment (for example, 130°C) for 60 min. The condition of "no combustion, no explosion" was determined a pass condition.

The highest temperature at which the condition "number of passes/number of tests = 5/5" was satisfied was determined as the hot box test temperature for the corresponding example or comparative example.

Using Comparative Example 1 as the control group, the excess hot box test temperature = the hot box test temperature of each example or comparative example - the hot box test temperature of Comparative Example 1. When the excess hot box test temperature was between 0°C and 2°C (exclusive), it indicates an improvement in hot box performance; when the excess hot box test temperature was greater than or equal to 2°C, it indicates a significant improvement in hot box performance.

**Room-temperature storage capacity retention rate test method:**

The lithium-ion battery was placed in a 25°C thermostat and left standing for 30 min to allow the lithium-ion battery to reach a constant temperature. The lithium-ion battery at constant temperature was charged to a voltage of 4.4 V at a constant current of 1C, then charged at a constant voltage of 4.4 V until the current was 0.05C, and subsequently discharged to a voltage of 3.0 V at a constant current of 1C, the capacity was recorded as an initial capacity. The battery was then charged to 3.85 V at a constant current of 1C, charged at a constant voltage of 3.85 V until the current was 0.05C (approximately 50% state of charge (SOC)), stored at 25°C for 6 months, discharged to a voltage of 3.0 V at a constant current of 1C, charged to a voltage of 4.4 V at a constant current of 1C, charged at a constant voltage of 4.4 V until the current was 0.05C, and finally discharged to a voltage of 3.0 V at a constant current of 1C, and the final discharge capacity was referred to as the reversible capacity after storage.

The capacity retention rate (%) of the lithium-ion battery after room-temperature storage = reversible capacity after storage/initial capacity $\times$ 100%.

**Example 1-1**

<Preparation of positive electrode plate>

Positive electrode active material $LiNi_{0.33}Co_{0.33}Mn_{0.33}O_2$ (where n% = 33%), positive electrode additive polyacrylonitrile (m = 3, $M_w$ = 300), conductive agent acetylene black, and binder PVDF were mixed at a mass ratio of 97:0.5:0.8:1.7, added with N-methylpyrrolidone (NMP) as a solvent, and the resulting product was stirred with a vacuum mixer until a positive electrode slurry with a solid content of 75 wt% and a uniform system was prepared. The positive electrode slurry was uniformly applied onto one surface of a positive electrode current collector aluminum foil with a thickness of 10 $\mu$m and dried at 90°C to obtain a positive electrode plate having a positive electrode active material layer (with a thickness of 110 $\mu$m) coated on one surface. The above steps were repeated on another surface of the aluminum foil to obtain a positive electrode plate coated with the positive electrode active material layer on two surfaces. The positive electrode plate was dried at 90°C, then cold pressed, followed by cutting and tab welding, to obtain a positive electrode plate of 74 mm $\times$ 867 mm for later use.

<Preparation of negative electrode plate>

Negative electrode active material graphite, conductive agent conductive carbon (Super P), and binder styrene-butadiene rubber (SBR for short, weight-average molecular weight of 500000) were mixed at a mass ratio of 97.8:0.7:1.5, added with deionized water as a solvent, and the resulting product was stirred with a vacuum mixer until a negative electrode slurry with a solid content of 70 wt% and a uniform system was prepared. The negative electrode slurry was uniformly applied onto one surface of a negative electrode current collector copper foil with a thickness of 8 $\mu$m and dried at 90°C to obtain a negative electrode plate having a negative electrode active material layer (with a thickness of 130 $\mu$m) coated on one surface. The above steps were repeated on another surface of the copper foil to obtain a negative electrode plate coated with the negative electrode active material layer on two surfaces. The negative electrode plate was dried at 90°C, then cold pressed, followed by cutting and tab welding, to obtain a negative electrode plate of 76 mm $\times$ 851 mm for later use.

<Preparation of electrolyte>

In an environment with a water content of less than 10 ppm, non-aqueous organic solvents ethylene carbonate (EC), diethyl carbonate (DEC), propylene carbonate (PC), propyl propionate (PP), and vinyl ethylene carbonate (VC) were mixed at a mass ratio of 20:30:20:28:2, and lithium hexafluorophosphate ($LiPF_6$) was then added to the non-aqueous organic solvents, dissolved, and mixed uniformly to obtain an electrolyte. Based on a mass of the electrolyte, a mass percentage of the non-aqueous organic solvent was 87%, and a mass percentage of the lithium salt was 13%.

<Preparation of separator>

A porous polyethylene film with a thickness of 7 $\mu$m (manufacturer: Nitto) was used.

<Preparation of lithium-ion battery>

The negative electrode plate, the separator, and the positive electrode plate prepared above were stacked and wound in sequence to obtain an electrode assembly having a winding structure. The electrode assembly was placed into an aluminum-plastic film packaging bag and dried, and then the electrolyte was injected, followed by processes such as vacuum sealing, standing, formation, degassing, and trimming, to obtain a lithium-ion battery. The upper limit voltage for formation was 4.15 V, the formation temperature was 70°C, and the standing time during formation was 2 h.

**Examples 1-2 to 1-15**

These examples were the same as Example 1-1, except that the related preparation parameters were adjusted according to Table 1.

**Examples 2-1 to 2-18**

These examples were the same as Example 1-10, except that the related preparation parameters were adjusted according to Table 2.

**Example 3-1**

This example was the same as Example 1-2, except that in the <Preparation of electrolyte>, a nitrile additive succinonitrile (z% = 0.1%) was further added, the content of the non-aqueous organic solvent varied with the content of the nitrile additive, and the sum of the mass percentages of the non-aqueous organic solvent, lithium salt, and nitrile additive was 100% based on the mass of the electrolyte.

**Examples 3-2 to 3-8**

These examples were the same as Example 3-1, except that the related preparation parameters were adjusted according to Table 3.

**Comparative Example 1**

This comparative example was the same as Example 1-1, except that in the <Preparation of positive electrode plate>, no positive electrode additive was added, and that the mass ratio of the positive electrode active material, the conductive agent, and the binder was regulated to 97.5:0.8:1.7.

**Comparative Examples 2 to 5**

These comparative examples were the same as Example 1-1, except that the related preparation parameters were adjusted according to Table 1.

The preparation parameters and performance parameters of the examples and comparative examples are shown in Table 1 to Table 3.

**Table 1**

| | Positive electrode additive | m | $M_w$ | x (%) | $xM_w/1000$ | Hot box test temperature (°C) | Excess hot box test temperature (°C) |
|---|---|---|---|---|---|---|---|
| Example 1-1 | polyacrylonitrile | 3 | 300 | 0.35 | 0.10 5 | 126 | 1 |
| Example 1-2 | polyacrylonitrile | 3 | 300000 | 0.35 | 105 | 130 | 5 |
| Example 1-3 | polyacrylonitrile | 3 | 500000 | 0.35 | 175 | 128 | 3 |
| Example 1-4 | polyacrylonitrile | 3 | 800000 | 0.35 | 280 | 127 | 2 |

(continued)

| | Positive electrode additive | m | $M_w$ | x (%) | $xM_w/1000$ | Hot box test temperature (°C) | Excess hot box test temperature (°C) |
|---|---|---|---|---|---|---|---|
| Example 1-5 | polyacrylonitrile | 3 | 300000 | 0.01 | 3 | 126 | 1 |
| Example 1-6 | polyacrylonitrile | 3 | 300000 | 0.1 | 30 | 127 | 2 |
| Example 1-7 | polyacrylonitrile | 3 | 300000 | 0.2 | 60 | 127 | 2 |
| Example 1-8 | polyacrylonitrile | 3 | 300000 | 0.3 | 90 | 128 | 3 |
| Example 1-9 | polyacrylonitrile | 3 | 300000 | 0.42 | 126 | 129 | 4 |
| Example 1-10 | polyacrylonitrile | 3 | 300000 | 0.5 | 150 | 128 | 3 |
| Example 1-11 | polyacrylonitrile | 3 | 150000 | 0.5 | 75 | 127 | 2 |
| Example 1-12 | polybutenenitrile | 4 | 300000 | 0.35 | 105 | 128.5 | 3.5 |
| Example 1-13 | poly(5-hexenenitrile) | 6 | 300000 | 0.35 | 105 | 128 | 3 |
| Example 1-14 | polyacrylonitrile | 3 | 500 | 0.2 | 0.1 | 127 | 2 |
| Example 1-15 | polyacrylonitrile | 3 | 700000 | 0.42 8 | 299. 6 | 127 | 2 |
| Comparative Example 1 | \ | \ | \ | \ | \ | 125 | 0 |
| Comparative Example 2 | polyacrylonitrile | 3 | 300000 | 0.6 | 180 | \ | positive electrode plate breakage during cold pressing |
| Comparative Example 3 | polyacrylonitrile | 3 | 100 | 0.5 | 0.05 | 125 | 0 |
| Comparative Example 4 | polyacrylonitrile | 3 | 850000 | 0.5 | 425 | \ | poor dissolution of positive electrode additive, obvious white particles in positive electrode plate coating |
| Comparative Example 5 | poly(6-heptenenitrile) | 7 | 300000 | 0.5 | 150 | 125 | 0 |

Note: "\" in Table 1 indicates that there is no corresponding preparation parameter.

From Examples 1-1 to 1-15 and Comparative Examples 1 to 5, it can be seen that this application, by adding the positive electrode additive to the positive electrode active material layer and simultaneously regulating the carbon-to-nitrogen atom number ratio m of the positive electrode additive, the weight-average molecular weight $M_w$ of the positive electrode additive, and the mass percentage x% of the positive electrode additive within the ranges of this application, increases the hot box test temperature of the secondary battery, with the excess hot box test temperature greater than 0°C, indicating an improvement in the hot box performance of the secondary battery. In Comparative Examples 1 to 5, the secondary battery that no positive electrode additive is added to the positive electrode active material layer, or at least one of the carbon-to-nitrogen atom number ratio m of the positive electrode additive, the weight-average molecular weight $M_w$ of the positive electrode additive, or the mass percentage x% of the positive electrode additive is not within the ranges of this application, the hot box test temperature cannot be increased, with the excess hot box test temperature equal to 0°C, or, as in Comparative Examples 2 and 4, the positive electrode plate exhibits manufacturing abnormalities and cannot be used normally, indicating that the hot box performance of the secondary battery is not improved.

The value of $xM_w/1000$ typically affects the hot box performance of the secondary battery. From Examples 1-1 to 1-11, 1-14, 1-15, and Comparative Examples 3 and 4, it can be seen that secondary batteries with the value of $xM_w/1000$

within the ranges of this application exhibit higher hot box test temperatures, with the excess hot box test temperature greater than 0°C, indicating an improvement in the hot box performance of the secondary battery.

**Table 2**

| | x (%) | n (%) | n/(100x) | U (V) | U/x | C (Ah) | C/x | Coating weight of positive electrode active material layer (mg/1540.25mm$^2$) | Coating weight of negative electrode active material layer (mg/1540.25mm$^2$) | Hot box test temperature (°C) | Excess hot box test temperature (°C) |
|---|---|---|---|---|---|---|---|---|---|---|---|
| Example 1-11 | 0.5 | 33 | 0.66 | 4.35 | 8.7 | 2 | 4 | 240 | 130 | 127 | 2 |
| Example 2-2 | 0.5 | 33 | 0.66 | 4 | 8.0 | 2 | 4.0 | 240 | 130 | 127 | 2 |
| Example 2-3 | 0.4 | 33 | 0.83 | 4.5 | 11.3 | 2 | 5.0 | 240 | 130 | 128.5 | 3.5 |
| Example 2-4 | 0.225 | 33 | 1.47 | 4.5 | 20.0 | 2 | 8.9 | 240 | 130 | 129 | 4 |
| Example 2-5 | 0.09 | 33 | 3.67 | 4.5 | 50.0 | 2 | 22.2 | 240 | 130 | 129.5 | 4.5 |
| Example 2-6 | 0.05 | 33 | 6.60 | 4 | 80.0 | 2 | 40.0 | 240 | 130 | 131 | 6 |
| Example 2-7 | 0.05 | 33 | 6.60 | 4.55 | 91.0 | 2 | 40.0 | 240 | 130 | 129 | 4 |
| Example 2-8 | 0.04 | 33 | 8.25 | 4.4 | 110.0 | 2 | 50.0 | 240 | 130 | 128 | 3 |
| Example 2-9 | 0.03 | 33 | 11.00 | 4.4 | 146.7 | 2 | 66.7 | 240 | 130 | 127.5 | 2.5 |
| Example 2-10 | 0.02 | 33 | 16.50 | 4.55 | 227.5 | 2 | 100.0 | 240 | 130 | 127.5 | 2.5 |
| Example 2-11 | 0.01 | 33 | 33.00 | 4.4 | 440.0 | 2 | 200.0 | 240 | 130 | 126 | 1 |
| Example 2-12 | 0.5 | 33 | 0.66 | 4.35 | 8.7 | 1.2 | 2.4 | 144 | 78 | 130 | 5 |
| Example 2-13 | 0.1 | 33 | 3.30 | 4.35 | 43.5 | 20 | 200.0 | 300 | 160 | 130 | 5 |
| Example 2-14 | 0.5 | 33 | 0.66 | 4.35 | 8.7 | 1.1 | 2.2 | 140 | 75 | 127 | 2 |
| Example 2-15 | 0.45 | 18 | 0.40 | 4.35 | 9.7 | 2 | 4.4 | 240 | 130 | 127 | 2 |
| Example 2-16 | 0.09 | 18 | 2.00 | 4.35 | 48.3 | 2 | 22.2 | 240 | 130 | 131 | 6 |
| Example 2-17 | 0.025 | 50 | 20.00 | 4.55 | 182.0 | 2 | 80.0 | 240 | 130 | 127 | 2 |
| Example 2-18 | 0.02 | 64 | 32.00 | 4.55 | 227.5 | 2 | 100.0 | 240 | 130 | 127 | 2 |

The upper limit voltage U and the value of U/x, the operating capacity C and the value of C/x, and the mass percentage n% of Ni in the transition metal element and the value of n/(100x) typically affect the hot box performance of the secondary battery. From Examples 1-11 and 2-1 to 2-18, it can be seen that secondary batteries with the upper limit voltage U and the value of U/x, the operating capacity C and the value of C/x, and the mass percentage n% of Ni in the transition metal element and the value of n/(100x) within the ranges of this application exhibit higher hot box test temperatures, with the excess hot box test temperature greater than 0°C, indicating good hot box performance of the secondary battery.

**Table 3**

| | x (%) | z (%) | z+x | Nitrile additive | Hot box test temperature (°C) | Excess hot box test temperature (°C) | Room-temperature storage capacity retention rate (%) |
|---|---|---|---|---|---|---|---|
| Example 1-2 | 0.35 | \ | 0.35 | succinonitrile | 130 | 5 | 84 |
| Example 3-1 | 0.35 | 0.1 | 0.45 | succinonitrile | 130.5 | 5.5 | 87 |
| Example 3-2 | 0.35 | 1.65 | 2 | succinonitrile | 131.5 | 6.5 | 90.1 |
| Example 3-3 | 0.35 | 3.8 | 4.15 | succinonitrile | 131.5 | 6.5 | 90.5 |
| Example 3-4 | 0.35 | 2.65 | 3 | succinonitrile | 133 | 8 | 92.5 |
| Example 3-5 | 0.35 | 4.15 | 4.5 | succinonitrile | 131 | 6 | 90 |
| Example 3-6 | 0.35 | 3.65 | 4 | succinonitrile | 132.5 | 7.5 | 92 |
| Example 3-7 | 0.35 | 0.7 | 1.05 | succinonitrile | 130.5 | 5.5 | 88 |
| Example 3-8 | 0.5 | 2 | 2.5 | adiponitrile | 131.5 | 6.5 | 90.2 |
| Note: "\" in Table 3 indicates that there is no corresponding preparation parameter. | | | | | | | |

From Examples 1-2, 3-1 to 3-8, it can be seen that when the electrolyte contains the nitrile additive, the room-temperature storage performance of the secondary battery can be improved on the basis that the secondary battery exhibits good hot box performance.

The content z% of the nitrile additive typically affects the hot box performance and room-temperature storage performance of the secondary battery. From Examples 1-2, 3-1 to 3-7, it can be seen that secondary batteries with the content z% of the nitrile additive within the ranges of this application exhibit higher hot box test temperatures, with the excess hot box test temperature greater than 0°C, indicating an improvement in the hot box performance of the secondary battery. Additionally, the secondary batteries exhibit higher room-temperature storage capacity retention rates, indicating an improvement in the room-temperature storage performance of the secondary battery.

When the electrolyte contains the nitrile additive, the value of z+x typically affects the hot box performance and room-temperature storage performance of the secondary battery. From Examples 3-1 to 3-7, it can be seen that secondary batteries with the value of z+x within the ranges of this application exhibit higher hot box test temperatures, with the excess hot box test temperature greater than 0°C, indicating an improvement in the hot box performance of the secondary battery. Additionally, the secondary batteries exhibit higher room-temperature storage capacity retention rates, indicating an improvement in the room-temperature storage performance of the secondary battery.

When the electrolyte contains the nitrile additive, the type of the nitrile additive typically affects the hot box performance and room-temperature storage performance of the secondary battery. From Examples 3-1 to 3-8, it can be seen that secondary batteries with the type of the nitrile additive within the ranges of this application exhibit higher hot box test temperatures, with the excess hot box test temperature greater than 0°C, indicating an improvement in the hot box performance of the secondary battery. Additionally, the secondary batteries exhibit higher room-temperature storage capacity retention rates, indicating an improvement in the room-temperature storage performance of the secondary battery.

It should be noted that in this specification, the terms "include", "comprise", or any of their variants are intended to cover a non-exclusive inclusion, such that a process, method, article, or device that includes a series of elements includes not only those elements but also other elements that are not expressly listed, or further includes elements inherent to such process, method, article, or device.

All embodiments in this specification are described in a related manner. For a part that is the same or similar between some embodiments, reference may be made between some embodiments. Each embodiment focuses on differences from other embodiments.

The above descriptions are merely preferred embodiments of this application, and are not intended to limit this application. Any modifications, equivalent replacements, improvements, and the like made without departing from the spirit and principle of this application shall fall within the protection scope of this application.

**Claims**

1. A secondary battery, comprising an electrode assembly and an electrolyte, wherein the electrode assembly comprises a positive electrode plate, a negative electrode plate, and a separator, the separator is disposed between the positive electrode plate and the negative electrode plate, and the positive electrode plate comprises a positive electrode current collector and a positive electrode active material layer disposed on at least one surface of the positive electrode current collector; wherein,

   the positive electrode active material layer comprises a positive electrode active material and a positive electrode additive;
   the positive electrode active material comprises a transition metal element, the transition metal element comprising one or more selected from the group consisting of Co, Ni, Mn, Fe, and V; and
   the positive electrode additive is a nitrile-containing organic compound, a carbon-to-nitrogen atom number ratio of the positive electrode additive is m, $1 \leq m \leq 6$, a weight-average molecular weight of the positive electrode additive is $M_w$, $300 \leq M_w \leq 800000$; and based on a mass of the positive electrode active material layer, a mass percentage of the positive electrode additive is x%, wherein, $0.01 \leq x \leq 0.50$.

2. The secondary battery according to claim 1, wherein, the secondary battery satisfies at least one of the following conditions (1) to (3):

$$(1)\ 3 \leq m \leq 4;$$

$$(2)\ 300000 \leq M_w \leq 500000;$$

or

$$(3)\ 0.30 \leq x \leq 0.50.$$

3. The secondary battery according to claim 1, wherein, the positive electrode additive comprises one or more selected from the group consisting of polyacrylonitrile, polybutenenitrile, poly(5-hexenenitrile), and polyisobutylonitrile.

4. The secondary battery according to claim 1, wherein, $0.1 \leq xM_w/1000 \leq 300$.

5. The secondary battery according to claim 4, wherein, $90 \leq xM_w/1000 \leq 175$.

6. The secondary battery according to claim 1, wherein, the electrolyte comprises a nitrile additive, the nitrile additive comprises one or more selected from the group consisting of succinonitrile, adiponitrile, ethylene glycol bis(2-cyanoethyl) ether, and 1,2,3-tris(2-cyanoethoxy)propane; and
   based on a mass of the electrolyte, a mass percentage of the nitrile additive is z%, $0.1 \leq z < 4.2$.

7. The secondary battery according to claim 6, wherein, $2.0 \leq z+x \leq 4.5$.

8. The secondary battery according to claim 7, wherein, $3.0 \leq z+x \leq 4.0$.

9. The secondary battery according to claim 1, wherein, an upper limit voltage of the secondary battery is U V, $8.0 \leq U/x \leq 440.0$, and $3.0 \leq U \leq 5.0$.

10. The secondary battery according to claim 9, wherein, $10.0 \leq U/x \leq 100.0$.

11. The secondary battery according to claim 10, wherein, $20.0 \leq U/x \leq 80.0$.

12. The secondary battery according to claim 1, wherein, an operating capacity of the secondary battery is C Ah, $1 \leq C \leq$

20, and $2.2 \leq C/x \leq 200.0$.

13. The secondary battery according to claim 12, wherein, $5.0 \leq C/x \leq 50.0$.

14. The secondary battery according to claim 1, wherein, the transition metal element comprises Ni, and based on a total mass of the transition metal, a mass percentage of Ni is n%, wherein $18 \leq n \leq 64$, and $0.4 \leq n/(100x) \leq 33.0$.

15. The secondary battery according to claim 14, wherein, $2.0 \leq n/(100x) \leq 20.0$.

16. An electronic apparatus, comprising the secondary battery according to any one of claims 1 to 15.

## INTERNATIONAL SEARCH REPORT

International application No.

**PCT/CN2023/082279**

| A. | CLASSIFICATION OF SUBJECT MATTER |
|---|---|

H01M4/62(2006.01)i

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 正极, 阴极, 添加, 聚, 丙烯, 丁烯, 己烯, 腈, 氰基, positive, cathode, additive, poly+, +CN

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114388804 A (DONGGUAN AMPEREX TECHNOLOGY LTD.) 22 April 2022 (2022-04-22)<br>description, paragraphs 3-117 | 1-16 |
| X | KR 20010081547 A (LG CHEMCAL INVESTMENT, LTD.) 29 August 2001 (2001-08-29)<br>description, paragraphs 11-61 | 1-16 |
| X | US 2013095382 A1 (KIM, Scon-Hye et al.) 18 April 2013 (2013-04-18)<br>description, paragraphs 22-84 | 1-16 |
| X | JP 2011134596 A (SANYO ELECTRIC CO., LTD.) 07 July 2011 (2011-07-07)<br>description, paragraphs 8-46 | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **06 November 2023** | **10 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/082279**

| Patent document cited in search report | | | Publication date (day/month/year) | Patent family member(s) | | | Publication date (day/month/year) |
|---|---|---|---|---|---|---|---|
| CN | 114388804 | A | 22 April 2022 | US | 2023207819 | A1 | 29 June 2023 |
| KR | 20010081547 | A | 29 August 2001 | KR | 100385700 | B1 | 27 May 2003 |
| US | 2013095382 | A1 | 18 April 2013 | US | 9123957 | B2 | 01 September 2015 |
| | | | | KR | 20130039500 | A | 22 April 2013 |
| | | | | KR | 101666877 | B1 | 18 October 2016 |
| JP | 2011134596 | A | 07 July 2011 | None | | | |

Form PCT/ISA/210 (patent family annex) (July 2022)